# EUROPEAN PATENT APPLICATION

(11) **EP 2 348 570 A1**
(43) Date of publication of application: **27.07.2011**
(21) Application number: 09820623.8
(22) Date of filing: 15.10.2009
(51) Int. Cl.: H01M 14/00, H01L 31/04

(54) **DYE-SENSITIZED SOLAR CELL AND DYE-SENSITIZED SOLAR CELL MODULE**

(30) Priority: 17.10.2008 JP 2008268974
(71) Applicant: Sharp Kabushiki Kaisha, Osaka-shi, Osaka 545-8522 (JP)
(72) Inventor: KOBAYASHI, Shinsuke, Osaka-shi, Osaka 545-8522 (JP); FUKUI, Atsushi, Osaka-shi, Osaka 545-8522 (JP); KOMIYA, Ryoichi, Osaka-shi, Osaka 545-8522 (JP)
(74) Representative: Müller - Hoffmann & Partner
(86) International application number: PCT/JP2009/067855
(87) International publication number: WO 2010/044445

(57) **Abstract**

Disclosed are a dye-sensitized solar cell and a dye-sensitized solar cell module that suppress a decrease in photoelectric conversion efficiency caused by dye adsorption to an insulation layer. The dye-sensitized solar cell is **characterized by** having a stacked structure wherein an electroconductive layer (13), a photoelectric conversion layer (15) formed of a porous semiconductor layer into which a dye is absorbed, a porous insulation layer (19), a catalyst layer (16), and a counter-electrode electroconductive layer (17) are stacked in this order on a light-transmissive support body (11), with an insulation cover part (20) that is comprised of a material which differs from that of the porous insulation layer (19) formed on at least a part of or on all of the surface of the porous insulation layer (19).

## Description

### TECHNICAL FIELD

The present invention relates to a dye-sensitized solar cell and a dye-sensitized solar cell module.

### BACKGROUND ART

A solar cell capable of converting sunlight to electric power is watched with interest as an energy source substituting for fossil fuel. At present, a solar cell employing a crystalline silicon substrate and a thin-film silicon solar cell are beginning to be partially put into practice. However, the former has such a problem that the manufacturing cost for the silicon substrate is high, and the latter has such a problem that various types of semiconductor manufacturing gas and a complicated apparatus must be employed and hence the manufacturing cost is increased. Therefore, while efforts for reducing the cost per power generation output by improving the efficiency for photoelectric conversion are continued in each solar cell, the aforementioned problems have not yet been solved.

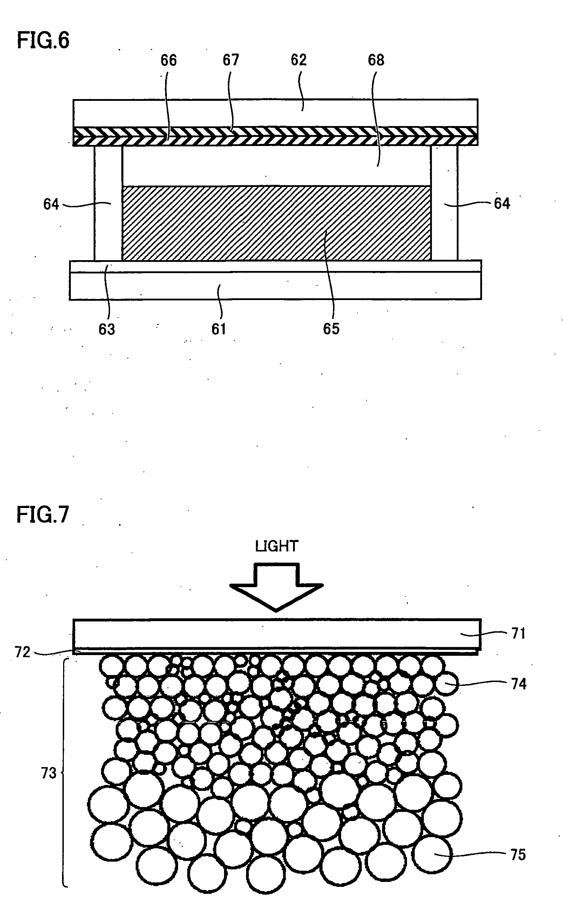

As a new type of solar cell, a photoelectrochemical solar cell utilizing photoinduced electron transfer of a metal complex is proposed (refer to Japanese Patent Laying-Open No. 01-220380 (Patent Document 1)). In this photoelectrochemical solar cell, a photoelectric conversion layer made of a photoelectric conversion material adsorbing a photosensitizing dye to have an absorption spectrum in the visible light region and an electrolytic material is held between two electrodes each of glass substrate provided with the electrode on the surface thereof. More specifically, a dye-sensitized solar cell is prepared by injecting an electrolyte (carrier transport layer 68) between a first support body 61 and a second support body 62 which are glass substrates, as shown in Fig. 6. Referring to Fig. 6, a conductive layer 63, a sealer 64, a photoelectric conversion layer 65, a catalyst layer 66, a counter-electrode conductive layer 67 and carrier transport layer 68 (electrolyte) are provided on first support body 61 which is a glass substrate, between the same and second support body 62 which is a glass substrate.

When light is applied to the aforementioned photoelectrochemical solar cell, electrons are generated in photoelectric conversion layer 65, the generated electrons are transferred to counter-electrode conductive layer 67 through an external electric circuit (not shown), and the transferred electrons return into photoelectric conversion layer 65 by ions in the electrolyte (carrier transport layer 68). Electric energy is extracted through such a series of flows of the electrons.

A technique of stacking a light scattering layer containing particles (scattering particles), whose particle sizes are relatively large, having light scattering properties on a porous semiconductor layer so that incident light upon a dye-sensitized solar cell can be utilized to the maximum is known, and it is known that the performance of the solar cell is improved by this technique (refer to Japanese Patent Laying-Open No. 2001-093591 (Patent Document 2), for example). Fig. 7 shows an outline of a solar cell provided with such a porous semiconductor layer. As shown in Fig. 7, a conductive layer 72 and a porous semiconductor layer 73 adsorbing a dye are successively stacked on a support body 71 on a side of incident light (photoreceiving surface), and porous semiconductor layer 73 is provided with semiconductor particles 74 of small particle sizes and semiconductor particles 75 of large particle sizes in this order from the side of the photoreceiving surface, i.e., the same has such a structure that a layer having low light scattering properties and a layer having high light scattering properties are stacked in this order from the side of the photoreceiving surface, whereby incident light can be efficiently utilized for photoelectric conversion.

A technique of providing a separator made of a material having a high conductor level between a porous semiconductor layer and a catalyst layer in order to suppress electron transfer from a photoelectric conversion layer to the catalyst layer is known (refer to Japanese Patent Laying-Open No. 2002-367686 (Patent Document 3), for example). In other words, an insulating layer, provided at an interval from a photoreceiving surface through the porous semiconductor layer, can function as a light scattering layer if particle sizes are relatively large and the same has light scattering properties.

### PRIOR ART DOCUMENTS

### PATENT DOCUMENTS

| | |
|---|---|
| Patent Document 1: | Japanese Patent Laying-Open No. 01-220380 |
| Patent Document 2: | Japanese Patent Laying-Open No. 2001-093591 |
| Patent Document 3: | Japanese Patent Laying-Open No. 2002-367686 |

### SUMMARY OF THE INVENTION

### PROBLEMS TO BE SOLVED BY THE INVENTION

In a dye-sensitized solar cell having such a structure that an insulating layer functions as a light scattering layer, a dye is adsorbed also on scattering particles constituting the insulating layer, and this causes reduction of the photoelectric conversion efficiency of the dye-sensitized solar cell having this structure. In other words, it has turned out that, when the dye is present on the surfaces of the scattering particles, incident light reaching the particles is not scattered but absorbed by the dye and hence the essential object of utilizing the incident light to the maximum is not achieved.

The inventors have made deep studies in order to solve the aforementioned problem, to find a technique of controlling reduction of photoelectric conversion efficiency resulting from dye adsorption on an insulating layer in a dye-sensitized solar cell having such a structure that the insulating layer functions as a light scattering layer.

### MEANS FOR SOLVING THE PROBLEMS

In other words, a dye-sensitized solar cell according to the present invention has such a multilayer structure that a conductive layer, a photoelectric conversion layer in which a dye is adsorbed on a porous semiconductor layer, a porous insulating layer, a catalyst layer and a counter-electrode conductive layer are stacked in this order on a support body having light transmission properties, while the surface of the aforementioned porous insulating layer is at least partially or entirely provided with an insulation coating portion made of a material different from that of the porous insulating layer.

The porous insulating layer provided with the aforementioned insulation coating portion preferably has a smaller quantity of dye adsorbable per unit area than the porous insulating layer not provided with the aforementioned insulation coating portion.

The aforementioned porous insulating layer is preferably constituted of a first insulating layer material which is at least any of oxides of metals selected from a group consisting of zirconium, niobium, tungsten, strontium, indium, tantalum and barium.

The aforementioned insulation coating portion is preferably constituted of a second insulating layer material which is at least any material selected from a group consisting of silicon oxide, aluminum oxide and magnesium oxide.

Preferably, the porous insulating layer adsorbs a dye, and has a quantity of dye adsorption of at least 10⁻¹² mol/cm² and not more than 10⁻⁹ mol/cm² per projected area on the support body.

The present invention also relates to a dye-sensitized solar cell module in which a plurality of dye-sensitized solar cells are connected in series with each other, wherein at least two of the plurality of dye-sensitized solar cells are dye-sensitized solar cells having the aforementioned structure, and the catalyst layer or the counter-electrode conductive layer of each of the dye-sensitized solar cell and the conductive layer of the dye-sensitive solar cell adjacent thereto are electrically connected with each other.

### EFFECTS OF THE INVENTION

According to the present invention, the surface of the aforementioned porous insulating layer is at least partially or entirely provided with the insulation coating portion made of the material different from that of the porous insulating layer so that the quantity of dye adsorbable per unit area is smaller than that in a porous insulating provided with no insulation coating portion in the dye-sensitized solar cell having the porous insulating layer for suppressing electron transfer from the photoelectric conversion layer to the catalyst layer between the porous semiconductor layer (photoelectric conversion layer) on which the dye is adsorbed and the catalyst layer, whereby a dye-sensitized solar cell suppressing reduction of photoelectric conversion efficiency resulting from dye adsorption on the insulating layer can be provided.

### BRIEF DESCRIPTION OF THE DRAWINGS

Fig. 1 is a schematic sectional view showing an example of a multilayer structure which is a principal part of a dye-sensitized solar cell according to the present invention.
Fig. 2 is a schematic diagram showing examples of a porous insulating layer in the dye-sensitized solar cell according to the present invention and an insulation coating portion formed on the overall surface thereof.
Fig. 3 is a schematic diagram showing the porous insulating layer in the dye-sensitized solar cell according to the present invention and an insulation coating portion formed on part of the surface thereof.
Fig. 4A is a schematic diagram showing part of manufacturing steps for the dye-sensitized solar cell according to the present invention.
Fig. 4B is a schematic diagram showing part of the manufacturing steps for the dye-sensitized solar cell according to the present invention.
Fig. 4C is a schematic diagram showing part of the manufacturing steps for the dye-sensitized solar cell according to the present invention.
Fig. 4D is a schematic diagram showing part of the manufacturing steps for the dye-sensitized solar cell according to the present invention.
Fig. 4E is a schematic diagram showing part of the manufacturing steps for the dye-sensitized solar cell according to the present invention.
Fig. 5 is a schematic sectional view showing a multilayer structure which is a principal part of a dye-sensitized solar cell module according to the present invention.
Fig. 6 is a schematic sectional view of a principal part showing a layered structure of a dye-sensitized solar cell according to Patent Document 1.
Fig. 7 is a schematic sectional view showing arrangement of scattering particles in a dye-sensitized solar cell according to Patent Document 2.

### MODES FOR CARRYING OUT THE INVENTION

A dye-sensitized solar cell (may hereinafter be referred to as "solar cell") according to the present invention has such a multilayer structure that a conductive layer, a photoelectric conversion layer in which a dye is adsorbed on a porous semiconductor layer, a porous insulating layer, a catalyst layer and a counter-electrode conductive layer are stacked in this order on a support body having light transmission properties, while the surface of the aforementioned porous insulating layer is at least partially or entirely provided with an insulation coating portion made of a material different from that of the porous insulating layer.

A dye-sensitized solar cell module (may hereinafter be referred to as "module") according to the present invention is characterized in that at least two solar cells including the dye-sensitized solar cell according to the present invention are connected in series with each other.

A preferred embodiment of the dye-sensitized solar cell according to the present invention is described with reference to the drawings. This embodiment is an example, and execution in various forms is possible in the range of the present invention. While the following embodiment is described with reference to the drawings, those denoted by the same reference signs in the drawings of this application show the same portions or corresponding portions.

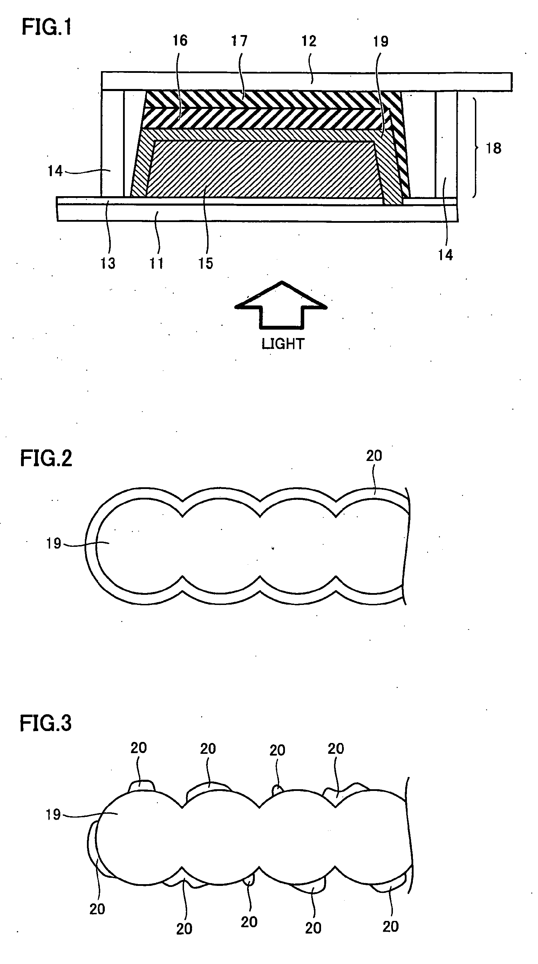

Fig. 1 is a schematic sectional view showing a multilayer structure which is a principal part of the dye-sensitized solar cell according to the present invention. Referring to Fig. 1, a conductive layer 13, a photoelectric conversion layer 15, a porous insulating layer 19, a catalyst layer 16 and a counter-electrode conductive layer 17 are stacked in this order on a first support body 11. A carrier transport material contained in a carrier transport layer 18 permeates from photoelectric conversion layer 15 over porous insulating layer 19, catalyst layer 16 and counter-electrode conductive layer 17.

The multilayer structure of these is sealed with sealer 14 on the side surface, and provided with a second support body 12 on the upper surface.

### (Support Body)

First support body 11 and second support body 12 are members serving as photoreceiving surfaces of the solar cell and require light transmission properties, and hence the same are made of a material at least having light transmission properties.

The thicknesses of first support body 11 and second support body 12, not particularly restricted, are preferably set to 0.2 to 5 mm.

The aforementioned material which has light transmitting properties and constitutes first support body 11 and second support body 12 is not particularly restricted, so far as the same is a material generally usable for a solar cell and capable of exerting the effects of the present invention. As such a material, a glass substrate of soda glass, fused quartz glass or crystalline quartz glass, a heat-resistant resin plate such as a flexible film or the like can be listed, for example.

As a material constituting the aforementioned flexible film (may hereinafter be referred to also as "film"), tetraacetyl cellulose (TAC), polyethylene terephthalate (PET), polyphenylene sulfide (PPS), polycarbonate (PC), polyallylate (PA), polyether imide (PEI), phenoxy resin, polytetrafluoroethylene (PTFE) or the like can be listed, for example.

In a case of involving heating when forming each layer on the support body, e.g., in a case of forming conductive layer 13 on the support body with heating at about 250°C, polytetrafluoroethylene (PTFE) having heat resistance of at least 250°C is particularly preferable among the materials for constituting the aforementioned film. Thus, the material constituting the aforementioned film may be selected in response to the heating temperature.

### (Conductive Layer)

Conductive layer 13 serves as a photoreceiving surface of the solar cell and requires light transmitting properties, and hence the same is made of a light-transmitting material. However, the material may simply be a material substantially transmitting light of a wavelength having effective sensitivity to at least a photosensitizing dye described later, and may not necessarily have light transmitting properties with respect to light of all wave ranges.

The light-transmitting material constituting the conductive layer is not particularly restricted, so far as the same is a material generally usable for a solar cell and capable of exerting the effects of the present invention. As such a material constituting the conductive layer, indium-tin composite oxide (ITO), fluorine-doped tin oxide (FTO), zinc oxide (ZnO) or the like can be listed.

The thickness of aforementioned conductive layer 13 is preferably 0.02 to 5 µm, while membrane resistance is desirably as low as possible, and preferably not more than 40 Ω/sq. The membrane resistance denotes resistance in each layer.

A metallic lead wire may be provided on conductive layer 13, in order to reduce the membrane resistance. As the material for the metallic lead wire, platinum, gold, nickel, titanium or the like can be listed, for example. The metallic lead wire can be formed on the support body by well-known sputtering, evaporation or the like, for example, and the metallic lead wire can be provided on conductive layer 13 by forming the conductive layer on the support body including this metallic lead wire. Alternatively, the metallic lead wire may be formed on the surface of the conductive layer, after forming conductive layer 13 on the support body, for example. The width of the metallic lead wire is preferably set to 10 µm to 200 µm in the case of providing the metallic lead wire, and there is no possibility that the quantity of incident light is reduced and a solar cell having excellent photoelectric conversion efficiency can be manufactured in the case of providing the metallic wire with such a width.

### (Photoelectric Conversion Layer)

Photoelectric conversion layer 15 is formed by making a porous semiconductor layer adsorb a dye, and filling up the same with a carrier transport material.

While the porous semiconductor layer is constituted of a semiconductor and can be provided in any form such as a particulate, a membrane having a large number of pores or the like so far as the same is porous, a membranous form is preferable. In the present invention, porous denotes that the specific surface area is 0.5 to 300 m²/g. The same also denotes that the porosity is at least 20 %. Such a specific area is obtained by BET which is gas adsorption for measurement of the surface area, while the porosity is a value obtained by calculation from the thickness (layer thickness) and the mass of the porous semiconductor layer and the density of the material. Thus, a larger number of dye molecules can be adsorbed by increasing the specific surface area, so that sunlight can be efficiently absorbed. Further, the carrier transport material for returning electrons into the photoelectric conversion layer can be sufficiently diffused into the semiconductor layer by setting the porosity to at least a constant value.

The material for the semiconductor constituting the porous semiconductor layer is not particularly restricted, so far as the same is that generally used for a photoelectric conversion material. As such a material for the semiconductor, a compound such as titanium oxide, zinc oxide, tin oxide, iron oxide, niobium oxide, cerium oxide, tungsten oxide, nickel oxide, strontium titanate, cadmium sulfide, lead sulfide, zinc sulfide, indium phosphide, copper-indium sulfide (CuInS₂), CuAlO₂, SrCu₂O₂ or the like or a combination of these materials can be listed. Among these, metallic oxides, particularly titanium oxide, zinc oxide, tin oxide and niobium oxide are preferable, and titanium oxide is particularly preferable in consideration of photoelectric conversion efficiency, stability and safety. These materials for the semiconductor can also be employed as a mixture of at least two types as described above, and the mixing ratio in this case may be properly adjusted.

In the present invention, the aforementioned titanium oxide is not restricted to various types of titanium oxide in a narrow sense such as anatase-type titanium oxide, rutile titanium oxide, amorphous titanium oxide, metatitanic acid, orthotitanic acid and the like but includes titanium hydroxide, hydrous titanium oxide and the like, and these can be employed singly or as a mixture. While the two types of crystalline systems of the anatase type and the rutile type can take any form depending on the preparation and the thermal history, the anatase type is generally employed.

The aforementioned semiconductor constituting the porous semiconductor layer is preferably a polycrystalline sintered body consisting of fine particles, in view of stability, easiness of crystal growth, the manufacturing cost and the like. The average particle size of the aforementioned fine particles is preferably at least 5 nm and less than 50 nm, and more preferably at least 10 nm and not more than 30 nm, in view of obtaining a sufficiently large effective surface area with respect to a projected area in order to convert incident light to electric energy with a high yield.

The light scattering properties of the porous semiconductor layer can be adjusted by the particle sizes (average particle size) of the material for the semiconductor employed for formation of this layer. Depending on conditions for forming the porous semiconductor layer, a porous semiconductor layer formed by semiconductor particles having a large average particle size generally has high light scattering properties, and can improve a light trapping ratio by scattering incident light. While a porous semiconductor layer formed by semiconductor particles having a small average article size has low light scattering properties, the quantity of adsorption can be increased by increasing the number of adsorption sites (adsorption sites) for a dye. In the present invention, therefore, a layer formed by semiconductor particles whose average particle size is at least 50 nm, more preferably at least 50 nm and not more than 600 nm may be provided on the polycrystalline sintered body consisting of the aforementioned fine particles.

When the porous semiconductor layer has a layer made of a porous semiconductor having high light scattering properties, the average particle size of the semiconductor material constituting the same is so large that the mechanical strength is low, and a problem as the structure of the solar cell may also arise. In this case, the mechanical strength of the porous semiconductor layer can be compensated by blending a semiconductor material having a small average particle size into a semiconductor material having a large average particle size in the ratio of not more than 10 mass %, for example.

The thickness of the porous semiconductor layer, not particularly restricted, is preferably 0.5 to 50 µm, in view of photoelectric conversion efficiency. Particularly in a case of including a layer consisting of semiconductor particles, whose average particle size is at least 50 nm, having high light scattering properties, the thickness of the layer is preferably 0.1 to 40 µm and more preferably 5 to 20 µm, while the thickness of a layer consisting of particles whose average particle size is at least 5 nm and less than 50 nm is preferably 0.1 to 50 µm and more preferably 10 to 40 µm.

A method of forming a membrane-like porous semiconductor layer on the conductive layer is not particularly restricted, but a well-known method can be listed. More specifically, (1) a method of applying paste containing file particles forming a semiconductor material onto the conductive layer by screen printing, inkjet printing or the like and thereafter firing the same, (2) a method of forming the layer on the conductive layer by CVD or MOCVD with desired source gas, (3) a method of forming the layer on the conductive layer by PVD, evaporation, sputtering or the like employing a source solid or (4) a method of forming the layer on the conductive layer by a sol-gel process, a method utilizing electrochemical oxidation-reduction reaction or the like can be listed. Among these methods, screen printing employing paste is particularly preferable, since a thick-film (thick-layer) porous semiconductor layer can be formed at a low cost.

In order to improve the photoelectric conversion efficiency of the solar cell, it is necessary to form a photoelectric conversion layer on which a dye described later is adsorbed in a larger quantity. Therefore, that having a large specific surface area is preferable as the porous semiconductor layer, and in a case where the same is made of a membrane-like material, the specific surface area is preferably 10 to 200 m²/g, for example. Also when the porous semiconductor layer is made of a particulate material, the same preferably has the aforementioned specific surface area in consideration of the quantity of dye adsorption.

A method of forming the porous semiconductor layer by employing anatase-type titanium oxide (simply referred to as titanium oxide in the following description) as semiconductor particles is specifically described.

First, a sol is prepared by dropping 125 mL of titanium isopropoxide into 750 mL of 0.1 M aqueous nitric acid solution for hydrolysis and heating the same at 80°C for eight hours. Thereafter the obtained sol is heated in an autoclave of titanium at 230°C for 11 hours, for growing titanium oxide particles. Thereafter a colloidal solution containing titanium oxide particles having an average particle size (average primary particle size) of 15 nm is prepared by performing ultrasonic dispersion under room temperature for 30 minutes. Then, titanium oxide particles are obtained by adding ethanol, twice the solution in volume, to the obtained colloidal solution and centrifuging the same at a rotational frequency of 5000 rpm thereby separating the titanium oxide particles and the solvent from each other.

Then, the obtained titanium oxide particles are washed, and a liquid mixture prepared by adding a solution, obtained by dissolving ethyl cellulose and terpineol into anhydrous ethanol, to the titanium oxide particles is thereafter stirred to disperse the titanium oxide particles. Thereafter titanium oxide paste is obtained by heating the liquid mixture under a vacuum condition for evaporating ethanol. The concentration is adjusted so that the titanium oxide solid concentration is 20 wt. %, the ethyl cellulose concentration is 10 wt. % and the terpineol concentration is 70 wt. %, for example, as the final composition. The aforementioned final composition is illustrative, and the composition is not restricted to this.

As the solvent employed for preparing the paste containing (having suspended) semiconductor particles, a glyme-based solvent such as ethylene glycol monomethyl ether, an alcohol-based solvent such as isopropyl alcohol, a mixed solvent of isopropyl alcohol and toluene, water or the like can be listed, in place of the above.

Then, the porous semiconductor layer is obtained by applying the paste containing the semiconductor particles onto a conductive layer by the aforementioned method and firing the same. For drying and firing, conditions such as the temperature, the time, the atmosphere and the like must be properly adjusted, depending on a support body as used and the type of the semiconductor particles. The firing can be performed under the atmosphere or an inert gas atmosphere in the range of about 50 to 800°C for 10 seconds to 12 hours, for example. This drying and firing can be performed once at a single temperature or at least twice by varying the temperature. The specific surface area of the porous semiconductor layer manufactured in this manner is 10 to 200 m²/g.

The average particle size in this specification is a value obtained from a diffraction peak of XRD (X-ray diffraction). More specifically, the average particle size is obtained from the half band width of a diffraction angle in θ/2θ measurement of XRD and the Scherrer equation: D = (K.λ)/(β.cosθ) (where D represents the crystal grain size (Å), K represents the Scherrer constant, λ represents the wavelength [Å] of x-rays, β represents the half band width (rad) of diffracted rays, and θ represents the diffraction angle). In a case of anatase-type titanium oxide, for example, the half band width of a diffraction peak (2θ = around 25.3°) corresponding to a (101) plane may be measured.

### (Dye)

The aforementioned porous semiconductor layer is made to adsorb the dye and filled up with the carrier transport material described later, to function as photoelectric conversion layer 15.

As the dye adsorbed on the porous semiconductor layer to function as a photosensitizer, various organic dyes, metal complex dyes and the like having absorption in the visible light region and/or the infrared light region can be listed, and a single type or at least two types of these dyes can be selectively employed.

As the organic dyes, an azo-based dye, a quinone-based dye, a quinonimine-based dye, a quinacridone-based dye, a squalilium-based dye, a cyanine-based dye, a merocyanine-based dye, a triphenylmethane-based dye, a xanthene-based dye, a porphyryin-based dye, a perylene-based dye, an indigo-based dye, a naphthalocyanine-based dye and the like can be listed, for example. The absorption factors of these organic dyes are generally large as compared with the metal complex dyes each taking such a form that molecules are coordinate-bonded to a transition metal.

As the metal complex dyes, those having such forms that molecules are coordinate-bonded to metals such as Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te, Rh and the like can be listed, and phthalocyanine-based dyes and ruthenium-based dyes are preferable among these, while ruthenium-based dyes expressed in the following formulas (1) to (3) are particularly preferable:

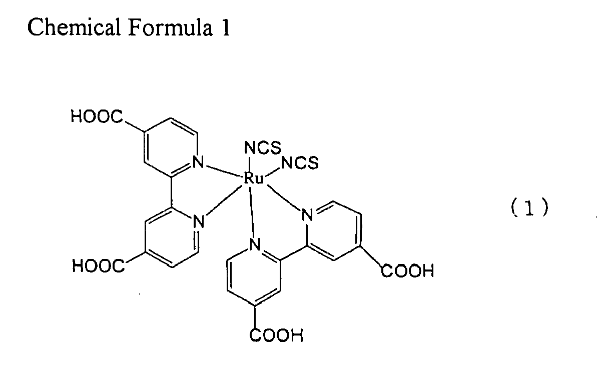

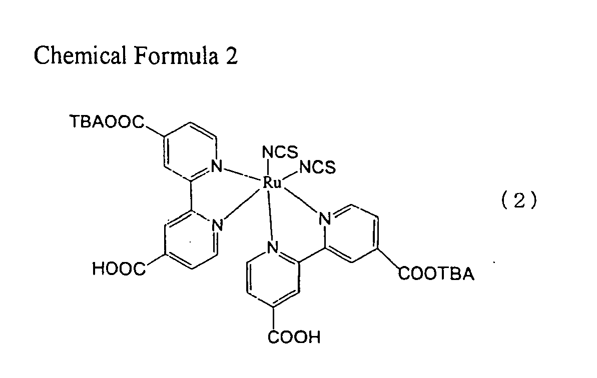

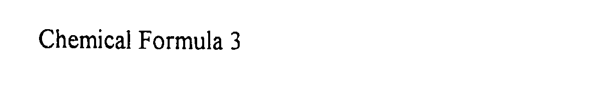

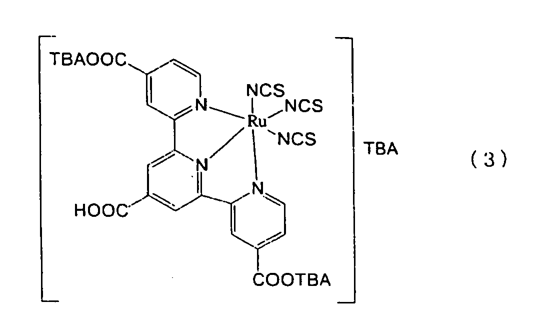

In order to make the dye strongly adsorbed on the porous semiconductor layer, that having an interlocking group such as a carboxylic group, a carboxylic anhydride group, an alkoxy group, a hydroxyl group, a hydroxyalkyl group, a sulfonic group, an ester group, a mercapto group, a phosphonyl group or the like in dye molecules is preferably employed. Among these, the carboxylic acid and the carboxylic anhydride group are particularly preferable. The interlocking group provides electrical coupling simplifying electron transfer between the dye in an excited state and the conduction band of the porous semiconductor layer.

As a method of making the porous semiconductor layer adsorb the dye, a method of dipping the porous semiconductor layer formed on the conductive layer into a solution (may hereinafter be referred to as a solution for dye adsorption) in which the dye is dissolved can be listed, for example. Conditions such as the temperature and the time for the dipping may be properly adjusted in response to the dye concentration in the solution into which the porous semiconductor layer is dipped. In general, adsorption saturation is easily achieved at a lower temperature or in a shorter time in a case of employing a solution containing a dye in a high concentration, as compared with a case of a low concentration.

A solvent for dissolving the dye may simply be that dissolving the dye, and more specifically, alcohol such as ethanol, ketone such as acetone, ether such as diethyl ether or tetrahydrofuran, a nitrogen compound such as acetonitrile, halogenated aliphatic hydrocarbon such as chloroform, aliphatic hydrocarbon such as hexane, aromatic hydrocarbon such as benzene, ester such as ethyl acetate, water or the like can be listed. At least two types of such solvents may also be mixed with each other to be employed.

While the dye concentration in the solution for dye adsorption can be properly adjusted in response to the used dye and the type of the solvent, the concentration is as high as possible in order to improve the adsorption function (efficiency), and may be at least 5 × 10⁻⁴ mol/L, for example.

### (Carrier Transport Material)

In the present invention, "carrier transport layer 18" is a region into which the carrier transport material is injected, and denotes the region, inside sealer 14, held between conductive layer 13 and support body 12 and carried by sealer 14, as shown in Fig. 1. Referring to Fig. 1, therefore, photoelectric conversion layer 15, catalyst layer 16, counter-electrode conductive layer 17 and porous insulating layer 19 are filled up with the carrier transport material.

Such a carrier transport material is constituted of a conductive material capable of transporting ions, and a liquid electrolyte, a solid electrolyte, a gel electrolyte, a fused-salt gel electrolyte or the like can be listed as a suitable material, for example.

The aforementioned liquid electrolyte may simply be a liquid substance containing an oxidation-reduction species, and is not particularly restricted so far as the same is that generally usable in a cell, a solar cell or the like. More specifically, that consisting of an oxidation-reduction species and a solvent capable of dissolving the same, that consisting of an oxidation-reduction species and fused salt capable of dissolving the same or that consisting of an oxidation-reduction species and a solvent and fused salt capable of dissolving the same can be listed.

As the oxidation-reduction species, an I⁻/I³⁻ system, a Br²⁻/Br³⁻ system, an Fe²⁺/Fe³⁺ system, a quinone/hydroquinone system or the like can be listed, for example. More specifically, a combination of a metal iodide such as lithium iodide (LiI), sodium iodide (Nal), potassium iodide (KI), calcium iodide (CaI₂) or the like and iodine (I₂), a combination of tetraalkyl ammonium salt such as tetraethyl ammonium iodide (TEAI), tetrapropyl ammonium iodide (TPAI), tetrabutyl ammonium iodide (TBAI), tetrahexyl ammonium iodide (THAI) or the like and iodine(I₂) or a combination of a metal bromide such as lithium bromide (LiBr), sodium bromide (NaBr), potassium bromide (KBr), calcium bromide (CaBr₂) or the like and bromine (Br₂) is preferable, and a combination of LiI and I₂ is particularly preferable among these.

As the solvent for the oxidation-reduction species, a carbonate compound such as propylene carbonate, a nitrile compound such as acetonitrile, alcohol such as ethanol, water, an aprotic polar substance or the like can be listed. Among these, the carbonate compound or the nitrile compound is particularly preferable. At least two types of these solvents can also be mixed with each other to be employed.

The solid electrolyte may simply be a conductive material capable of transporting electrons, holes and ions, employable as an electrolyte for the solar cell and having no fluidity. More specifically, a hole transport material such as polycarbazole, an electron transport material such as tetranitrofluororenone, a conductive polymer such as polylol, a polyelectrolyte prepared by solidifying a liquid electrolyte with a high polymer, a p-type semiconductor such as copper iodide or copper thiocyanate, an electrolyte prepared by solidifying a liquid electrolyte containing fused salt with fine particles or the like can be listed.

The aforementioned gel electrolyte generally consists of an electrolyte and a gelling agent. Mixing of the electrolyte and the gelling agent may be properly adjusted, and the aforementioned solid electrolyte can be employed as the electrolyte.

As the gelling agent, on the other hand, a crosslinked polyacrylic resin derivative, a crosslinked polyacrylonitrile derivative, a polyalkylene oxide derivative, silicone resin, a macromolecular gelling agent such as a polymer having a quaternary salt structure of a nitrogen-containing heterocyclic compound on a side chain or the like can be listed, for example.

The fused salt gel electrolyte generally consists of the aforementioned gel electrolyte and ordinary-temperature type fused salt.

As the ordinary-temperature type fused salt, quaternary ammonium salt of a nitrogen-containing heterocyclic compound such as pyridinium salt, imidazolium salt or the like can be listed, for example.

An additive may be added to each electrolyte constituting the aforementioned carrier transport material, if necessary.

As such an additive, a nitrogen-containing aromatic compound such as t-butylpyridine (TBP), imidazole salt such as dimethylpropyl imidazole iodide (DMPII), methylpropyl imidazole iodide (MPII), ethylmethyl imidazole iodide (EMII), ethyl imidazole iodide (EII) or hexylmethyl imidazole iodide (HMII) or the like can be listed.

The electrolyte concentration in the electrolyte constituting the carrier transport material is preferably in the range of 0.001 to 1.5 mol/L, and particularly preferably in the range of 0.01 to 0.7 mol/L. If a catalyst layer is present on the side of a photoreceiving surface in a module according to the present invention described later, however, incident light reaches the porous semiconductor layer on which the dye is adsorbed through the electrolyte, to excite carriers. Therefore, the performance may be reduced depending on the concentration of the electrolyte employed for a unit cell having the catalyst layer on the side of the photoreceiving surface, and hence the electrolyte concentration is preferably set in consideration of this point.

### (Porous Insulating Layer)

When photoelectric conversion layer 15 and catalyst layer 16 come into contact with each other, electron injection, i.e., leakage from photoelectric conversion layer 15 to catalyst layer 16 and further to counter-electrode conductive layer 17 takes place, to lead to reduction of the performance of the solar cell. Therefore, porous insulating layer 19 is generally provided between the porous semiconductor layer (photoelectric conversion layer 15) and a counter electrode. The material constituting porous insulating layer 19 is preferably a material having a high conduction band level, i.e. a first conductive layer material in which at least one type of material such as a metal oxide selected from a group consisting of zirconium oxide, niobium oxide, tungsten oxide, indium oxide, strontium oxide, tantalum oxide and barium oxide is employed, in view of suppressing electron transfer from photoelectric conversion layer 15 to catalyst layer 16.

In the present invention, porous insulating layer 19 is preferably in the form of a membrane. A method of forming membrane-like porous insulating layer 19 on the porous semiconductor layer is not particularly restricted, but a well-known method can be listed. More specifically, (1) a method of applying paste containing insulating layer material particles by screen printing, inkjet printing or the like and thereafter firing the same, (2) a method of forming the layer by CVD or MOCVD employing desired source gas, (3) a method of forming the layer by PVD, evaporation, sputtering or the like employing a source solid or (4) a method of forming the layer by a sol-gel process, a method utilizing electrochemical oxidation-reduction reaction or the like can be listed, similarly to the aforementioned porous semiconductor layer. While the shape of porous insulating layer 19 is not restricted, the same is generally provided to enclose photoelectric conversion layer 15 as shown in Fig. 1, so that an end of a side surface thereof passes through the conductive layer and comes into contact with the support body.

The material constituting porous insulating layer 19 can provide light scattering properties, depending on the particle size (average particle size, or simply referred to as a particle size) thereof. An insulating layer containing particles having a large particle size has high light scattering properties, and can improve the light trapping ratio by scattering the incident light. More specifically, particles of at least 50 nm and not more than 600 nm in particle size are employed as the material for porous insulating layer 19 when the average particle size of the material constituting the porous semiconductor layer is at least 5 nm and less than 50 nm, so that a component, included in the incident light, transmitted through the porous semiconductor layer can be reflected to reach the porous semiconductor layer again and a larger quantity of incident light can be absorbed by the dye. If the particle size of the material forming porous insulating layer 19 is so large that gaps between the particles are excessively widened and photoelectric conversion layer 15 and catalyst layer 16 partially come into contact with each other or reduction of the mechanical strength of the insulating layer comes into question, particles having a smaller particle size may be blended in a ratio of not more than 10 weight %, for example. Alternatively, an insulating layer of a two-layer structure may be formed by introducing a layer consisting of particles having a smaller particle size.

When performing adsorption of the dye on the porous semiconductor layer by forming the insulating layer on the porous semiconductor layer and thereafter dipping the same in a solution in which the dye is dissolved as described above, the insulating layer must be porous, in order to make the dye solution reach the porous semiconductor layer. Therefore, the insulating layer in the present invention is also referred to as a porous insulating layer, as described above. Porous is a synonym for porous in the aforementioned porous semiconductor layer.

In the adsorption of the dye on the aforementioned porous semiconductor layer, the dye is adsorbed also on the porous insulating layer (detailedly, the particles constituting the insulating layer) functioning as a light scattering layer, and the quantity of adsorption thereof is about at least 10⁻⁹ mol/cm² and not more than 10⁻⁸ mol/cm² per projected area (unit area) of the porous insulating layer onto the support body.

If the aforementioned quantity of dye adsorption on the porous semiconductor layer is increased, incident light reaching the dye adsorbed on the surfaces of scattering particles constituting the insulating layer is not scattered but absorbed by the dye and hence the incident light cannot be reflected, while the material constituting the insulating layer has a high conduction band level and hence electron injection from the dye absorbing the light cannot occur either. This leads to reduction of the photoelectric conversion efficiency of the dye-sensitized solar cell.

In order to prevent such reduction of the photoelectric conversion efficiency, insulation coating portion 20 is preferably formed on the whole or at least part of the surface of porous insulating layer 19 as shown in Fig. 2 or Fig. 3 in order to suppress adsorption of the dye on the porous insulating layer, and it is necessary that the quantity of dye adsorbable per unit area of the aforementioned porous insulating layer is reduced by providing such an insulation coating portion. The quantity of dye adsorption per projected area of the porous insulating portion onto the support body at this time is at least 10⁻¹² mol/cm² and not more than 10⁻⁹ mol/cm². When the porous insulating layer satisfies such a range of the quantity of dye adsorption, reduction of the photoelectric conversion efficiency resulting from the dye adsorbed on the particles constituting the insulating layer can be prevented. While the details are described later, the quantity of dye adsorption of 10⁻¹² mol per projected unit area is an extremely low order as a value calculated by measurement of absorbance, and a value close to a lower limit capable of suppressing adsorption of the dye on the porous insulating layer.

The material (second insulating material) constituting such an insulation coating portion is preferably a material such as at least any material selected from a group consisting of silicon oxide, aluminum oxide and magnesium oxide. It is assumed that "coat" includes both of a case of providing the aforementioned insulation coating portion on the surface of the porous semiconductor layer as a separate layer and a case of providing a layer, which is part of the surface of the porous semiconductor layer, retaining the aforementioned second insulating material. In the case of including the insulation coating portion, the quantity of dye adsorption per projected area of the aforementioned porous insulating layer on the support body denotes a value per projected area in a case of combining such a porous insulating layer and the insulation coating portion with each other. The aforementioned insulation coating portion is preferably formed as part of the surface of the porous insulating layer.

The thickness of the aforementioned insulation coating portion is desirably at least 1 nm and not more than 10 nm. In a case of setting the thickness of the insulation coating portion in the aforementioned range, the resistance of the carrier transport material filled into the porous insulating layer portion is not increased, whereby reduction of the photoelectric conversion efficiency can be further prevented.

As a technique of coating the porous insulating layer with the aforementioned second insulating material, a method of forming the porous insulating layer on the porous semiconductor layer, thereafter applying a precursor solution of the aforementioned second insulating material from the side of the surface of the porous insulating layer and thereafter performing heat treatment can be listed. As the precursor solution, a solution containing at least one of alkoxide of silicon, aluminum, magnesium or the like which is a metal constituting the second insulating material, an inorganic compound, a complex and the like can be employed. The precursor concentration in the precursor solution is preferably set to 0.1 to 50 weight % and more preferably set to 1 to 20 weight %. A solvent is preferably evaporated by the heat treatment described later, and alcohol such as ethanol, propanel or the like can be illustrated, for example.

Application of the aforementioned precursor solution is desirably performed while heating the substance to be coated with a hot plate or the like. The quantity of application of the precursor solution is desirably the minimum quantity necessary for executing coating of the porous insulating layer. In other words, the quantity of the precursor solution reaching the porous semiconductor layer is desirably reduced to the minimum. The heat treatment may be performed again after applying the precursor solution with heating.

More specifically, the heating temperature in the application is desirably at least 50°C and not more than 300°C. If the heating is performed at a temperature exceeding 300°C, the solvent contained in the precursor solution instantaneously volatilizes after the application, and hence there is a possibility that infiltration of the precursor solution in the thickness direction of the porous insulating layer is insufficient. The quantity of application of the precursor solution is desirably at least 0.2 mL and not more than 10 mL and more desirably at least 1 mL and not more than 10 mL per apparent volume of 1 cm³ of the surface of the porous insulating layer. If the quantity is less than 0.2 mL, it is insufficient for sufficiently covering the porous insulating layer. If the quantity exceeds 10 mL, the quantity of the precursor solution reaching the porous semiconductor layer may be increased, to lead to remarkable reduction of the quantity of dye adsorption on the porous semiconductor layer.

### (Catalyst Layer)

Catalyst layer 16 is provided on porous insulating layer 19. The material constituting catalyst layer 16 is not particularly restricted, so far as the same is generally used for a photoelectric conversion material in this field. As such a material, platinum, or a carbon material such as carbon black, ketjen black, graphite, carbon nanotube or fullerene can be listed, for example.

In a case of employing platinum, for example, catalyst layer 16 can be formed by a well-known method such as PVD, sputtering, evaporation, thermal decomposition of chloroplatinic acid, electrodeposition or the like. The layer thickness thereof is properly set to about 0.5 nm to 1000 nm, for example.

In a case of employing the carbon material such as carbon black, ketjen black, carbon nanotube, fullerene or the like, catalyst layer 16 can be formed by applying carbon dispersed into an arbitrary solvent to be pasty onto porous insulating layer 19 by screen printing or the like. Also in this case, the layer thickness is properly set to about 0.5 nm to 1000 nm, for example.

### (Counter-Electrode Conductive Layer)

Counter-electrode conductive layer 17 is provided on catalyst layer 16. The material constituting counter-electrode layer 17 is not particularly restricted, so far as the same is a material generally usable for a solar cell and capable of exerting the effects of the present invention. As such a material, a metal oxide such as indium-tin composite oxide (ITO), fluorine-doped tin oxide (FTO), zinc oxide (ZnO) or the like or a metallic material such as titanium, tungsten, gold, silver, copper, nickel or the like can be listed.

The form of counter-electrode conductive layer 17 is not particularly restricted, but the same can be in the form of a dense membrane, a porous membrane or a cluster. The layer thickness may simply be set in the range of 20 to 5000 nm, for example, and the membrane resistance of the counter-electrode conductive layer is preferably not more than 40 Ω/sq.

In order to form counter-electrode conductive layer 17, a well-known method such as screen printing, evaporation, CVD or the like can be employed.

Counter-electrode conductive layer 17 is provided with an extraction electrode, if necessary. The material constituting the extraction electrode and the structure thereof are not particularly restricted, so far as the same are a material and a structure generally usable for a solar cell and capable of exerting the effects of the present invention.

### (Sealer)

In the solar cell according to the present invention, the multilayer structure formed on the aforementioned support body is sealed with sealer 14, similarly to a well-known solar cell. Sealer 14 is important for preventing volatilization of the electrolyte and preventing infiltration of water or the like into the cell. Further, the sealer is important for absorbing a falling object or stress (impact) acting on the support body and for absorbing deflection or the like acting on the support body in employment over a long period.

The material constituting sealer 14 is not particularly restricted, so far as the same is a material generally usable for a solar cell and capable of exerting the effects of the present invention. As such a material, silicone resin, epoxy resin, polyisobutylene-based resin, hot-melt resin, glass frit or the like is preferable, for example, and at least two types of these may be employed in at least two layers. In a case of using a nitrile-based solvent or a carbonate-based solvent as the solvent for the oxidation-reduction electrolyte, silicone resin, hot-melt resin (ionomer resin, for example), polyisobutylene-based resin or glass frit is particularly preferable.

### (Dye-Sensitized Solar Cell)

The dye-sensitized solar cell is manufactured by forming second support body 12 on the upper surface of the multilayer structure sealed with the sealer in the aforementioned manner. In the dye-sensitized solar cell having the structure of the aforementioned respective layers, the quantity of dye adsorption in the porous insulating layer is reduced, to sufficiently suppress reduction of the photoelectric conversion efficiency. For example, the photoelectric conversion efficiency of the dye-sensitized solar cell according to the present invention is at least 7 %.

### (Dye-Sensitized Solar Cell Module)

The dye-sensitized solar cell module according to the present invention is a dye-sensitized solar cell module having a plurality of dye-sensitized solar cells connected in series with each other, and has such a structure that at least two of the plurality of dye-sensitized solar cells are the aforementioned dye-sensitized solar cells according to the present invention and the catalyst layer or the counter-electrode conductive layer of each of the dye-sensitized solar cell and the conductive layer of the dye-sensitive solar cell adjacent thereto are electrically connected with each other. As hereinabove described, the photoelectric conversion efficiency of the dye-sensitized solar cell according to the present invention is excellent, whereby the module including the solar cells is also excellent in photoelectric conversion efficiency and power generation efficiency.

In the present invention, it is assumed that methods of manufacturing the aforementioned dye-sensitized solar cell and the dye-sensitized solar cell module arbitrarily include other well-known steps such as steps of forming collectors, for example.

### Examples

The present invention is more specifically described with reference to Examples and comparative examples. However, the present invention is not restricted to these Examples and comparative examples. In each of the following Examples and comparative examples, the thickness of each layer was measured with a step profiler (E-VS-S28A by Tokyo Seimitsu Co., Ltd.). Further, the average particle size is a value obtained from a diffraction peak of XRD (X-ray diffraction), and the specific area is a value obtained by BET.

### (Example 1)

In Example 1, a dye-sensitized solar battery cell shown in Fig. 1 was prepared.

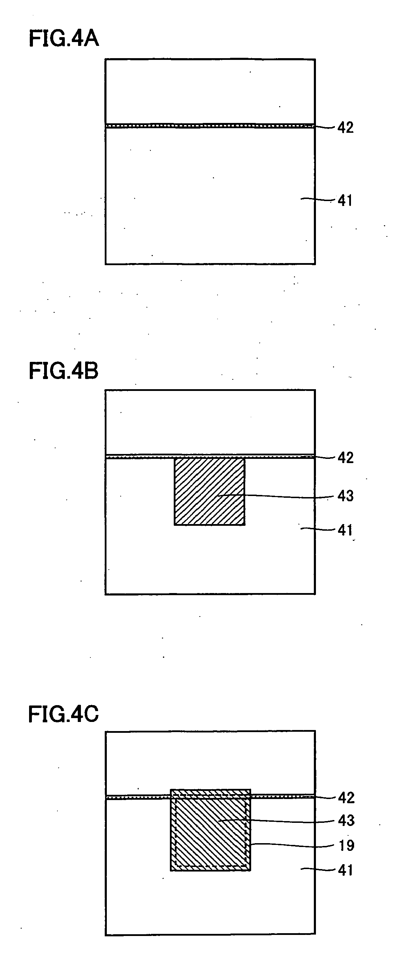

A transparent electrode substrate 41 (by Nippon Sheet Glass Co., Ltd., glass provided with SiO₂ film), in which a conductive layer made of fluorine-doped tin oxide (FTO) was formed on a support body consisting of a glass substrate, was prepared. The transparent electrode substrate 41 was 30 mm by 30 mm having a thickness of 4.0 mm. As shown in Fig. 4A, the conductive layer of transparent electrode substrate 41 in which the support body and the conductive layer were stacked was cut by laser scribing, to form a scribing line 42 (Figs. 4A to 4E are schematic diagrams in a case of observing the dye-sensitized solar cell from the upper surface). Then, commercially available titanium oxide paste (by Solaronix SA, trade name: D/SP) was applied by employing a screen plate having a pattern of a porous semiconductor layer shown in Fig. 4B and a screen printer (by Newlong Seimitsu Kogyo Co., Ltd, type number: LS-150), and leveling was performed at room temperature for one hour. Thereafter the obtained coating film was dried in an oven set to 80°C for 20 minutes, and further fired in the air for 60 minutes by employing a firing furnace (by Denken Co., Ltd., type number: KDF P-100) set to 500°C. The application, drying and firing steps were repeated four times in this order, to obtain a porous semiconductor layer 43 having a layer thickness of 25 µm. The specific surface area of porous semiconductor layer 43 was 120 m²/g.

As shown in Fig. 4C, paste containing zirconia particles (200 nm in average particle size) was applied onto porous semiconductor layer 43 with a screen printer and thereafter fired at 500°C for 60 minutes, to form a porous insulating layer 19 of 10 mm by 10 mm having a thickness of 13 µm in a planar portion. The specific surface area of formed porous insulating layer 19 was 5 m²/g, when measured by forming a membrane on FTO similarly to the above.

Then, the substrate was placed on a hot plate set to 200°C, and 5 µL (corresponding to 1 mL per cm³ of the porous insulating layer) of a 5 weight % ethanol solution of tetraethoxysilane (by Kishida Chemical Co., Ltd) was applied onto porous insulating layer 19 after a lapse of three minutes, dried and thereafter fired at 400°C for 30 minutes, to form an insulation coating portion of SiO₂ on the surface of porous insulating layer 19. The thickness of the insulation coating layer was about 5 nm.

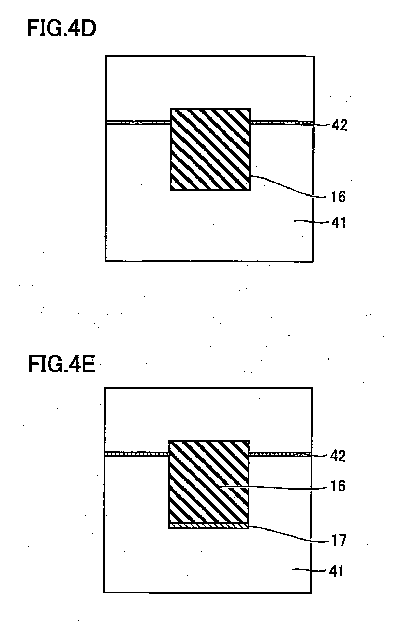

Then, as shown in Fig. 4D, a catalyst layer 16 was obtained by forming a film of Pt on porous insulating layer 19 by employing a mask provided with a prescribed pattern and an evaporator (by ULVAC. Inc., type number: ei-5) at an evaporation rate of 0.1 Å/s. The size and the position of catalyst layer 16 were set similarly to those of porous insulating layer 19.

As shown in Fig. 4E, further, a multilayer structure body was obtained by forming a layer of titanium of 400 nm in thickness on catalyst layer 16 as a counter-electrode conductive layer 17 by employing a mask provided with a prescribed pattern and an evaporator (by ULVAC. Inc., type number: ei-5) at an evaporation rate of 0.1 Å/s.

Then, the aforementioned multilayer structure body was dipped into a dye adsorption solution, having been previously prepared, at room temperature for 100 hours, and the multilayer structure body was thereafter washed with ethanol and dried at about 60°C for five minutes, so that a dye was adsorbed on the porous semiconductor layer.

The aforementioned dye adsorption solution is a solution of 4 × 10⁻⁴ mol/L in concentration prepared by dissolving the dye (by Solaronix SA, trade name: Ruthenium 620 1H3TBA) of the above formula (2) in a mixed solvent of acetonitrile and t-butanol of 1:1 in volume ratio.

Then, the substrate (support body) provided with the multilayer structure body and a glass substrate (second support body 12 in Fig. 1, for example) which is a support body were stuck to each other with a heat-sealing film (by E.I. du Pont de Nemours and Company, Himilan 1855) cut into a shape surrounding the periphery of the multilayer body, and these were compression-bonded to each other by heating the same in an oven set to about 100°C for 10 minutes.

Then, an electrolyte was injected into an electrolyte injection hole having been previously provided on the glass substrate which is a support body, and the electrolyte injection hole was sealed with ultraviolet curing resin (by ThreeBond Co., Ltd., trade name: 31X-101). A dye-sensitized solar cell (single cell) was obtained by thus filling a carrier transport material.

The aforementioned electrolyte was prepared by adding LiI (by Sigma-Aldrich Corporation) and I₂ (by Kishida Chemical Co., Ltd) to acetonitrile which is a solvent as oxidation-reduction species so that the concentrations were 0.1 mol/L and 0.01 mol/L respectively, further adding t-butylpyridine (by Sigma-Aldrich Corporation) and dimethylpropyl imidazole iodide (by Shikoku Chemicals Corporation) as additives so that the concentrations were 0.5 mol/L and 0.6 mol/L respectively, and dissolving the same.

### <Measurement of Photoelectric Conversion Efficiency>

Ag paste (by Fujikura Kasei Co., Ltd., trade name: Dotite) was applied to the obtained dye-sensitized solar cell as a collector portion by a well-known method. Then, a black mask having an opening whose area was 0.9 cm² was set on a photoreceiving surface of the solar cell, and light (AM 1.5 solar simulator) having intensity of 1 kW/m² was applied to this solar cell, to measure photoelectric conversion. The photoelectric conversion efficiency was 8.0 %.

### <Measurement of Quantity of Dye Adsorption>

The layers other than the porous semiconductor layer were removed from the multilayer structure body of the porous semiconductor layer, the porous insulating layer, the catalyst layer and the counter-electrode conductive layer formed on the transparent electrode substrate, to measure the quantity of the dye adsorbed on the porous insulating layer. In general, a porous semiconductor layer made of titanium oxide, constituted of fine particles of at least 5 nm and not more than 50 nm in average particle size and obtained by performing sintering is stronger in bonding between the particles than a porous insulating layer and adamant also as a membrane, and hence it is possible to separate a porous insulating layer, a catalyst layer and a counter-electrode conductive layer on the interface between the porous semiconductor layer and the porous insulating layer by adjusting force. No dye is adsorbed on the catalyst layer and the counter-electrode conductive layer, and hence the quantity of dye adsorption on the porous insulating layer can be measured without separating the porous insulating layer, the catalyst layer and the counter-electrode layer from each other. The details of the measurement are now described.

10 dye-sensitized solar battery cells were prepared, and each cell was scraped from above the counter-electrode layer on the outermost surface thereof with a sharp cutting tool such as a razor's edge, to leave the porous semiconductor layer and to separate the remaining layers. This mixture including the porous insulating layer was dipped into an aqueous potassium hydride solution of 0.1 mol/L and stirred for 10 minutes, to elute the adsorbed dye. Then, this solution was filled into an optical cell having an optical path length of 1 mm, and the absorbance of this solution was measured with a spectrophotometer. The dye concentration in a desorption liquid was obtained from peak absorbance of a spectrum around 600 nm and molar absorptivity (7500 L/mol-cm in the dye of the above formula (2)) of the dye in the aqueous solution. The desorption liquid contains the dye by 1.1 × 1.1 × 10 = 12.1 cm² of the porous insulating layer, and hence the quantity of dye adsorption per unit area can be calculated. The quantity of dye adsorption obtained in this manner was 2.5 × 10⁻¹⁰ mol/cm². In the case of measuring the quantity of dye adsorption according to the aforementioned method by employing 10 dye-sensitized solar battery cells, a case of not more than 1 × 10⁻¹² mol/cm² cannot be measured due to the lower limit of absorbance detactable with a spectrophotometer. This quantity of adsorption is a value close to a lower limit capable of suppressing adsorption of the dye on the aforementioned porous insulating layer.

As to the quantity of dye adsorption, the quantity of dye adsorption may be measured according to the aforementioned method by forming an insulating layer with the same raw material and the same method as those for forming porous insulating layer 19 on transparent conductive substrate 41 to have the same size and the same thickness, similarly forming an insulation coating portion and similarly performing dye adsorption. Similar results are obtained according to any measurement. However, it is difficult to form the insulating layer to be completely identical in size and thickness, and hence the method of separating the porous insulating layer is more preferable.

### (Example 2)

A dye-sensitized solar cell was prepared by a method similar to that in Example 1 except that an insulation coating portion consisting of an Al₂O₃ film whose thickness was about 5 nm was formed on the overall surface of porous insulating layer 19 by employing 6 µL of a 5 weight % ethanol solution of aluminum isopropoxide (by Kishida Chemical Co., Ltd) after forming porous insulating layer 19 in Example 1, and photoelectric conversion efficiency was measured. Further, the porous zirconia membrane provided with the Al₂O₃ insulation coating portion was separated similarly to Example 1, and the quantity of dye adsorption on the porous insulating layer was measured. Table 1 shows the conversion efficiency and the quantity of dye adsorption in the dye-sensitized solar cell.

### (Example 3)

A dye-sensitized solar cell was prepared by a method similar to that in Example 1 except that an insulation coating layer of MgO whose thickness was about 5 nm was formed by employing 6 µL of a 5 weight % ethanol solution of magnesium ethoxide (by Kishida Chemical Co., Ltd.) after forming porous insulating layer 19 in Example 1, and photoelectric conversion efficiency was measured. Further, the porous zirconia membrane provided with the MgO insulation coating portion was separated similarly to Example 1, and the quantity of dye adsorption on the porous insulating layer was measured. Table 1 shows the conversion efficiency and the quantity of dye adsorption in the dye-sensitized solar cell.

### (Example 4)

A dye-sensitized solar cell was prepared by a method similar to that in Example 1 except that the quantity of application of a tetraethoxysilane ethanol solution applied after forming porous insulating layer 19 in Example 1 was set to 0.6 µL, and photoelectric conversion efficiency was measured. Further, a porous zirconia membrane provided with an SiO₂ insulation coating portion was separated similarly to Example 1, and the quantity of dye adsorption on the porous insulating layer was measured. Table 1 shows the conversion efficiency and the quantity of dye adsorption in the dye-sensitized solar cell.

### (Example 5)

A dye-sensitized solar cell was prepared by a method similar to that in Example 2 except that the quantity of application of an aluminum isopropoxide solution applied after forming porous insulating layer 19 in Example 2 was set to 0.6 µL, and photoelectric conversion efficiency was measured. Further, a porous zirconia membrane provided with an Al₂O₃ insulation coating portion was separated similarly to Example 2, and the quantity of dye adsorption on the porous insulating layer was measured. Table 1 shows the conversion efficiency and the quantity of dye adsorption in the dye-sensitized solar cell.

### (Example 6)

A dye-sensitized solar cell was prepared by a method similar to that in Example 3 except that the quantity of application of a magnesium ethoxide solution applied after forming porous insulating layer 19 in Example 3 was set to 0.6 µL, and photoelectric conversion efficiency was measured. Further, a porous zirconia membrane provided with an MgO insulation coating portion was separated similarly to Example 3, and the quantity of dye adsorption on the porous insulating layer was measured. Table 1 shows the conversion efficiency and the quantity of dye adsorption in the dye-sensitized solar cell.

### (Example 7)

A dye-sensitized solar cell was prepared by providing an SiO₂ insulation coating portion by a method similar to that in Example 4 except that paste containing niobium oxide particles was employed as the material for a porous insulating layer formed on porous semiconductor layer 43 in Example 4, and photoelectric conversion efficiency was measured. Further, the porous niobium oxide membrane provided with the SiO₂ insulation coating portion was separated similarly to Example 4, and the quantity of dye adsorption on the porous insulating layer was measured. Table 1 shows the conversion efficiency and the quantity of dye adsorption in the dye-sensitized solar cell.

### (Examples 8 to 15)

Each dye-sensitized solar cell was prepared similarly to Example 1 in a porous insulating layer material, an insulation coating portion and the quantity of application of a precursor solution to the insulation coating portion shown in Table 1, and photoelectric conversion efficiency was measured. Further, a porous insulating layer provided with the insulation coating portion was separated, and the quantity of dye adsorption was measured. Table 1 shows the conversion efficiency and the quantity of dye adsorption in the dye-sensitized solar cell.

### (Comparative Example 1)

A dye-sensitized solar cell was prepared by a method similar to that in Example 1 except that no metal alkoxide treatment was performed after forming porous insulating layer 19 in Example 1, and photoelectric conversion efficiency was measured. Further, a porous zirconia membrane was separated similarly to Example 1, and the quantity of dye adsorption on the porous insulating layer was measured. Table 1 shows the conversion efficiency and the quantity of dye adsorption in the dye-sensitized solar cell.

### (Comparative Examples 2 to 7)

Each dye-sensitized solar cell was prepared by a method similar to that in comparative example 1 except that a material shown in Table 1 was employed as the material for a porous insulating layer formed on porous semiconductor layer 43 in comparative example 1, and photoelectric conversion efficiency was measured. Further, a porous insulating membrane was separated, and the quantity of dye adsorption was measured. Table 1 shows the conversion efficiency and the quantity of dye adsorption in the dye-sensitized solar cell.

**Table 1**

| | Porous Insulating Layer | Insulation coating Layer | Amount of Application of Precursor Solution (µL) | Quantity of Dye Substance on Porous Insulating Layer (mol/cm²) | Conversion Efficiency (%) |
|---|---|---|---|---|---|
| Example 1 | ZrO₂ | SiO₂ | 6 | 2.5 × 10⁻¹⁰ | 8.0 |
| Example 2 | ZrO₂ | Al₂O₃ | 6 | 4.1 × 10⁻¹⁰ | 7.9 |
| Example 3 | ZrO₂ | MgO | 6 | 5.8 × 10⁻¹⁰ | 7.8 |
| Example 4 | ZrO₂ | SiO₂ | 0.6 | 4.2 × 10⁻⁹ | 7.2 |
| Example 5 | ZrO₂ | Al₂O₃ | 0.6 | 6.3 × 10⁻⁹ | 7.3 |
| Example 6 | ZrO₂ | MgO | 0.6 | 7.4 × 10⁻⁹ | 7.2 |
| Example 7 | Nb₂O₅ | SiO₂ | 0.6 | 5.1 × 10⁻⁹ | 7.3 |
| Example 8 | Nb₂O₅ | Al₂O₃ | 0.6 | 1.9 × 10⁻⁹ | 7.3 |
| Example 9 | Nb₂O₅ | MgO | 0.6 | 2.5 × 10⁻⁹ | 7.4 |
| Example 10 | Nb₂O₅ | SiO₂ | 6 | 3.3 × 10⁻¹⁰ | 7.8 |
| Example 11 | WO₃ | SiO₂ | 6 | 6.3 × 10⁻¹⁰ | 7.7 |
| Example 12 | SrO | SiO₂ | 6 | 7.9 × 10⁻¹⁰ | 7.8 |
| Example 13 | In₂O₃ | SiO₂ | 6 | 4.2 × 10⁻¹⁰ | 7.6 |
| Example 14 | Ta₂O₅ | SiO₂ | 6 | 2.3 × 10⁻¹⁰ | 7.9 |
| Example 15 | BaO | SiO₂ | 6 | 8.4 × 10⁻¹⁰ | 7.7 |
| Comparative Example 1 | ZrO₂ | SiO₂ | - | 8.0 × 10⁻⁹ | 7.0 |
| Comparative Example 2 | Nb₂O₅ | SiO₂ | - | 9.4 × 10⁻⁹ | 6.9 |
| Comparative Example 3 | WO₃ | SiO₂ | - | 1.3 × 10⁻⁸ | 6.8 |
| Comparative Example 4 | SrO | SiO₂ | - | 7.1 × 10⁻⁹ | 7.0 |
| Comparative Example 5 | In₂O₃ | SiO | - | 6.9 × 10⁻⁹ | 6.9 |
| Comparative Example 6 | Ta₂O₅ | SiO₂ | - | 9.1 × 10⁻⁹ | 6.8 |
| Comparative Example 7 | BaO | SiO₂ | - | 8.8 × 10⁻⁹ | 6.8 |

### (Example 16)

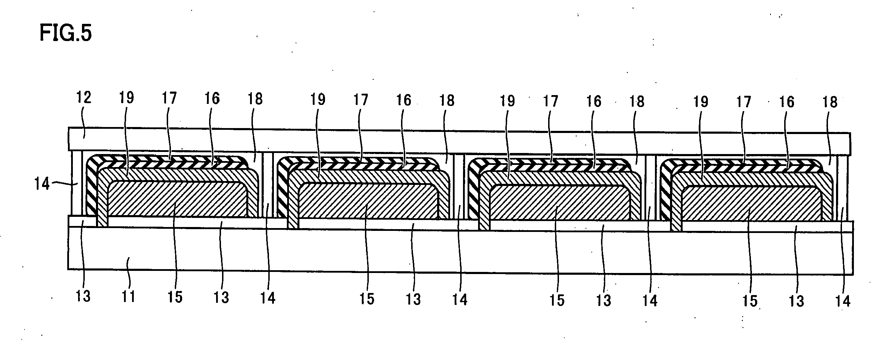

A dye-sensitized solar cell module shown in Fig. 5 was prepared.

First, a translucent substrate (by Nippon Sheet Glass Co., Ltd., trade name: glass provided with SiO₂ film, 60 mm by 37 mm) in which a transparent conductive layer 13 was formed on the surface of a first support body 11 was prepared, and four scribing lines were formed on prescribed positions parallelly in the vertical direction by laser-scribing the SiO₂ film on the surface of this translucent substrate, to cut transparent conductive layer 13. The width of the formed scribing lines is 100 µm.

Then, four porous semiconductor layers 15 of 50 mm by 5 mm having a thickness of 25 µm according to Example 1 were formed on the same side from the scribing lines respectively. Then, porous insulating layers 19 consisting of zirconia particles according to Example 1 were formed on porous semiconductor layers 15. The specific surface area of each porous semiconductor layer 15 was 120 m²/g, and the specific surface area of each porous insulating layer 19 was 5 m²/g. Then, catalyst layers 16, and thereafter counter-electrode conductive layers 17 were formed according to Example 1, to obtain multilayer structure bodies. The obtained multilayer structure bodies were dipped into the solution for dye adsorption employed in Example 1 at room temperature for 120 hours, so that the dye was adsorbed on porous semiconductor layers 15.

Then, the substrate was placed on a hot plate set to 200°C, and a 5 weight % ethanol solution of tetraethoxysilane (by Kishida Chemical Co., Ltd) was applied onto porous insulating layers 19 by 1 mL per cm³ of the porous insulating layers after a lapse of three minutes, dried and thereafter fired at 400°C for 30 minutes, to form insulation coating portions (not shown) of SiO₂ on the surfaces of porous insulating layers 19. The thickness of the insulation coating portions was about 5 nm.

Then, ultraviolet curing resin (by ThreeBond Co., Ltd., trade name: 31X-101) was applied between the multilayer structure bodies and around the cell with a dispenser (ULTRASAVER by EFD Inc.) to stick a second support body 12 (glass substrate of 60 mm by 30 mm by 1 mm) of an upper surface which is a cover layer, and thereafter the ultraviolet curing resin which is photosensitive resin was cured by applying ultraviolet rays with an ultraviolet lamp (NOVACURE by EFD Inc.), to form a sealer 14.

Thereafter the same electrolyte as that employed in Example 1 was injected into electrolyte injection holes having been previously provided in second support body 12 of the upper surface employed as the cover layer, the aforementioned ultraviolet curing resin-was then applied to the electrolyte injection holes, and the electrolyte injection holes were sealed by applying ultraviolet rays and curing the aforementioned curing resin similarly to the sealer to form carrier transport layers 18, thereby completing the dye-sensitized solar cell module.

Ag paste (by Fujikura Kasei Co., Ltd., trade name: Dotite) was applied to the obtained module as a collector portion. Then, a black mask having an opening whose area was 11 cm² was set on photoreceiving surfaces of the solar cells, light (AM 1.5 solar simulator) having intensity of 1 kW/m² was applied to these solar cells, and photoelectric conversion efficiency was measured. Table 2 shows the results.

### (Examples 17 to 23)

Each dye-sensitized solar cell module was prepared similarly to Example 16 in a porous insulating layer material, an insulation coating portion and the quantity of application of a precursor solution to the insulation coating portion shown in Table 2, and photoelectric conversion efficiency was measured. Further, a porous insulating membrane provided with the insulation coating portion was separated, and the quantity of dye adsorption was measured. Table 2 shows the conversion efficiency and the quantity of dye adsorption in the dye-sensitized solar cell module.

### (Comparative Example 8)

A dye-sensitized solar cell module was prepared by a method similar to that in Example 16 except that no formation of insulation coating portions by a metallic oxide was performed after formation of porous insulating layers 19 consisting of zirconia particles in Example 16, and photoelectric conversion efficiency was measured. Further, porous zirconia membranes were separated, and the quantity of dye adsorption on the porous insulating layers was measured. Table 2 shows the conversion efficiency and the quantity of dye adsorption in the dye-sensitized solar cell module.

### (Comparative Example 9)

A dye-sensitized solar cell module was prepared by a method similar to that in comparative example 8 except that paste containing niobium oxide particles was employed as the material for porous insulating layers 19 in comparative example 8, and photoelectric conversion efficiency was measured. Further, porous niobium oxide membranes provided with SiO₂ insulation coating portions were separated similarly to comparative example 3, and the quantity of dye adsorption on the porous insulating layers was measured. Table 2 shows the conversion efficiency and the quantity of dye adsorption in the dye-sensitized solar cell module.

**Table 2**

| | Porous Insulating Layer | Insulation coating Layer | Amount of Coating of Precursor Solution (µL) | Quantity of Dye on Porous Insulating Layer (mol/cm²) | Conversion Efficiency (%) |
|---|---|---|---|---|---|
| Example 16 | ZrO₂ | SiO₂ | 1 | 2.0 × 10⁻¹⁰ | 6.9 |
| Example 17 | ZrO₂ | Al₂O₃ | 1 | 3.9 × 10⁻¹⁰ | 6.7 |
| Example 18 | ZrO₂ | MgO | 1 | 6.6 × 10⁻¹⁰ | 6.6 |
| Example 19 | ZrO₂ | SiO₂ | 0.1 | 4.9 × 10⁻⁹ | 6.0 |
| Example 20 | ZrO₂ | Al₂O₃ | 0.1 | 2.3 × 10⁻⁹ | 6.1 |
| Example 21 | ZrO₂ | MgO | 0.1 | 7.4 × 10⁻⁹ | 6.1 |
| Example 22 | Nb₂O₅ | Al₂O₃ | 0.1 | 1.7 × 10⁻⁹ | 6.2 |
| Example 23 | Nb₂O₅ | SiO₂ | 1 | 8.2 × 10⁻¹⁰ | 6.7 |
| Comparative Example 8 | ZrO₂ | No | - | 8.3 × 10⁻⁸ | 5.9 |
| Comparative Example 9 | Nb₂O₅ | No | - | 9.0 × 10⁻⁹ | 5.8 |

As obvious from the results shown in Tables 1 and 2, the quantity of dye adsorption on the insulation-coated porous insulating layer is smaller than the quantity of dye adsorption on a conventional porous insulating layer having no insulation coating portion in each of the dye-sensitized solar cell and the dye-sensitized solar cell module according to the present invention, and hence it is understood that the same are superior in photoelectric conversion efficiency as compared with a conventional dye-sensitized solar cell and a conventional dye-sensitized solar cell module. When the quantity of dye adsorption on the insulation-coated porous insulating layer is in a specific range, the photoelectric conversion efficiency is further improved.

While the embodiment and Examples of the present invention have been described in the aforementioned manner, proper combinations of the structures of the aforementioned embodiment and Examples have also been planned from the outset.

The embodiment and Examples disclosed this time are to be considered as illustrative in all points and not restrictive. The range of the present invention is shown not by the above description but by the scope of claims for patent, and it is intended that all modifications in the meaning and range equivalent to the scope of claims for patent are included.

### DESCRIPTION OF REFERENCE SIGNS

11 first support body, 12 second support body, 13 conductive layer, 14 sealer, 15 photoelectric conversion layer, 16 catalyst layer, 17 counter-electrode conductive layer, 18 carrier transport layer, 19 porous insulating layer, 20 insulation coating portion, 41 transparent electrode substrate, 42 scribing line, 43 porous semiconductor layer, 61 first support body, 62 second support body, 63 conductive layer, 64 sealer, 65 photoelectric conversion layer, 66 catalyst layer, 67 counter-electrode conductive layer, 68 carrier transport layer, 71 support body, 72 conductive layer, 73 porous semiconductor layer, 74 semiconductor particle of small particle size, 75 semiconductor particle of large particle size.

## Claims

1. A dye-sensitized solar cell having such a multilayer structure that a conductive layer (13), a photoelectric conversion layer (15) in which a dye is adsorbed on a porous semiconductor layer, a porous insulating layer (19), a catalyst layer (16) and a counter-electrode conductive layer (17) are stacked in this order on a support body (11) having light transmission properties, wherein
the surface of said porous insulating layer (19) is at least partially or entirely provided with an insulation coating portion (20) made of a material different from that of said porous insulating layer (19).

2. The dye-sensitized solar cell according to claim 1, wherein
the porous insulating layer (19) provided with said insulation coating portion (20) has a smaller quantity of dye adsorbable per unit area than the porous insulating layer (19) not provided with said insulation coating portion (20).

3. The dye-sensitized solar cell according to claim 1, wherein
said porous insulating layer (19) is constituted of a first insulating layer material which is at least any of oxides of metals selected from a group consisting of zirconium, niobium, tungsten, strontium, indium, tantalum and barium.

4. The dye-sensitized solar cell according to claim 1, wherein
said insulation coating portion (20) is constituted of a second insulating layer material which is at least any material selected from a group consisting of silicon oxide, aluminum oxide and magnesium oxide.

5. The dye-sensitized solar cell according to claim 1, wherein
said porous insulating layer (19) adsorbs a dye, and has a quantity of dye adsorption of at least 10⁻¹² mol/cm² and not more than 10⁻⁹ mol/cm² per projected area on the support body.

6. A dye-sensitized solar cell module in which a plurality of dye-sensitized solar cells are connected in series with each other, wherein
at least two of said plurality of dye-sensitized solar cells are the dye-sensitized solar cells according to claim 1, and the catalyst layer (16) or the counter-electrode conductive layer (17) of each of the dye-sensitized solar cells and the conductive layer (13) of the dye-sensitive solar cell adjacent thereto are electrically connected with each other.
